# EUROPEAN PATENT APPLICATION

(11) **EP 2 104 054 A2**
(43) Date of publication of application: **23.09.2009**
(21) Application number: 09153552.6
(22) Date of filing: 24.02.2009
(51) Int. Cl.: G06F 21/24

(54) **Separated storage of data and key necessary to access the data**

(30) Priority: 19.03.2008 US 51753
(71) Applicant: SafeNet, Inc., Belcamp, MD 21017 (US)
(72) Inventor: Metzger, Brian, San Jose, CA 95118 (US); Gopalakrishnan, Venkitachalam, Fremont, California CA 94536 (US)
(74) Representative: Jones, Keith William

(57) **Abstract**

A novel approach introduces an extra layer of data security by storing files and the keys required to access the files separately. When the files are being accessed, the host of the files sends a request to an access device that stores the keys to access the files. The key will be provided to the host only if at least one of the following conditions is met: the host is within close proximity of the access device, the identity of the person attempting to access the files is authenticated, or the security status of the host is verified.

## Description

### BACKGROUND

Access to a computing/communication/electronic device can be protected by various security measures. Most commonly used security measures include but are not limited to, username/password verification, biometric identification, and RSA SecurID - a two-factor authentication based on something the user knows (a password or PIN) and something the user has (an authenticator). However, securing access to the device itself alone does not always protect the confidential or private information/data/file stored on the device. For example, a user may walk away from the computer he/she is using, leaving the files on the computer open to be accessed (at least temporarily) by anyone else. For another example, a laptop or a disk drive containing sensitive data may be lost or stolen, and anyone who is able to break through the security measures guarding the device will have open access to anything stored on it. Key(s) can be used to encrypt and/or decrypt sensitive data in the files for data security purposes. However, simply requiring key(s) to encrypt the files stored on a device is often not enough to protect the files from unwanted access or tampering if such key(s) are stored together with, instead of separate from, the files on the device and the can be used to decrypt the encrypted files.

### SUMMARY

A novel approach introduces an extra layer of data security by storing files and the keys required to access the files separately. When the files are being accessed, the host of the files sends a request to an access device that stores the key to access the files. The key will be provided to the host only if at least one of the following conditions is met: the host is within close proximity of the access device, the identity of the person attempting to access the files is authenticated, or the security status of the host is verified. In other words, access to the files can only be enabled when the person who carries the access device is near the host, the biometrics of the person who is attempting to access the files is identified, or the host is verified as not having been lost or stolen by a (remote) server. Consequently, the personal/confidential information stored on a lost/stolen/unattended host will not be compromised even if the security measures guarding the host have been broken or left open and the intruder has gained access to the host itself.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. These and other advantages of the present invention will become apparent to those skilled in the art upon a reading of the following descriptions and a study of the several figures of the drawings.

### BRIEF DESCRIPTION OF THE DRAWINGS

FIG. 1 depicts an example of a system to support separate storage of data and access key to the data.

FIG. 2 is a flow chart illustrating an example of a process to support separate storage of data and access key to the data.

FIG. 3 depicts an example of a system to support separate storage of data and access key to the data.

FIG. 4 depicts a flowchart of an example of a process to support separate storage of data and access key to the data.

FIG. 5 depicts an example of a system diagram to support separate storage of data and access key to the data.

FIG. 6 depicts a flowchart of an example of a process to support separate storage of data and access key to the data.

### DETAILED DESCRIPTION OF EMBODIMENTS

The approach is illustrated by way of example and not by way of limitation in the figures of the accompanying drawings in which like references indicate similar elements. It should be noted that references to "an" or "one" or "some" embodiment(s) in this disclosure are not necessarily to the same embodiment, and such references mean at least one.

Although the diagrams depict components as functionally separate, such depiction is merely for illustrative purposes. It will be apparent to those skilled in the art that the components portrayed in this figure can be arbitrarily combined or divided into separate software, firmware and/or hardware components. Furthermore, it will also be apparent to those skilled in the art that such components, regardless of how they are combined or divided, can execute on the same host or multiple hosts, and wherein the multiple hosts can be connected by one or more networks.

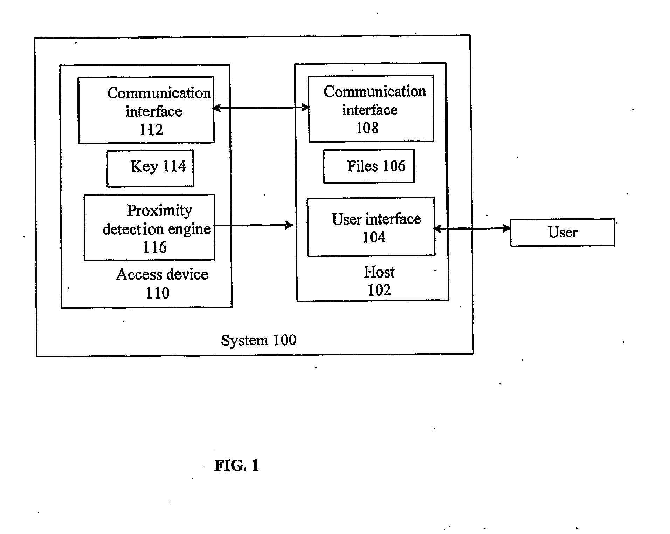

FIG. 1 depicts an example of a system diagram 100 to support separate storage of data and access key to the data in one embodiment. In the example of FIG. 1, the system 100 includes a host 102, which comprises of a user interface 104, file(s) 106, and a communication interface 108, and an access device 110, which comprises of a communication interface 112, a key 114 to access the files, and a proximity detection engine 116.

In the example of FIG. 1, the host 102 can be a computing device, a communication device, s storage device, or any electronic device that contains a volatile memory, such as DRAM or SRAM, and/or a non-volatile memory, such as magnetic or optical storage (not shown) to store files 106. For non-limiting examples, a host can be but is not limited to, a laptop PC, a desktop PC, a tablet PC, an iPod, a PDA, or a server machine. A storage device can be but is not limited to a hard disk drive, a flash memory drive, or any portable storage device. A communication device can be but is not limited to a mobile phone.

In the example of FIG. 1, the user interface 104 is a software component running on the host 102, which enables a user to access, browse, create, and/or modify the files 106 stored on the host. For a non-limiting example, the user interface can be a file browser associated with file management system under an operating system, which can be but is not limited to, Windows®, SUN-OS, UNIX, or Linux operating system. Alternatively, the user interface can be Web-based browser, which allows the user to access files 106 stored on the host 102 remotely via a network.

In the example of FIG. 1, the files 106 may include one or more of the following items: text, graph, picture, image, drawing, mail, audio, and video clips. Since a portion of the file may be privileged or contains sensitive data, access to the file can be protected by a key 114 and only the user with appropriate authorization in entitled to the key to access the file 106.

In the example of FIG. 1, the communication interface 108 and 112 are software components running on host 102 and access device 110, respectively, which enables the host and the access device to communicate with each other following certain communication protocols, such as TCP/IP protocol. The communication protocols between two devices are well known to those of skill in the art.

In the example of FIG. 1, the access device 110 can be a Bluetooth, Wi-Fi, or ZigBee enabled device. Bluetooth is a standard communications protocol primarily designed for low power communication with a short range. Bluetooth devices can communicate with another device when they are in close proximity of each other. Here, close proximity does not necessarily mean that the host 102 and the access device 110 have to be in line of sight of each other. On the contrary, the devices can even be in different rooms, as long as the received transmission at each device is powerful enough. Wi-Fi uses the same radio frequencies as Bluetooth, but employs different multiplexing schemes. Wi-Fi provides higher throughput resulting in a stronger connection and covers greater distances than Bluetooth, but may require more expensive hardware and higher power consumption. ZigBee uses small, low-power digital radios based on the IEEE 802.15.4 standard for wireless personal area network (WPAN). It is targeted at radio-frequency (RF) applications which require a low data rate, long battery life, and secure networking. ZigBee protocols are intended for use in embedded applications, such as the access device containing the key, which requires low data rates and low power consumption.

In the example of FIG. 1, the key 114 is a data security code that can be used as part of an authorization for a user to access the file 106. Key 114 can also be used to encrypt and/or decrypt sensitive data in the file 106 for security purposes. The meaning of access herein goes beyond simple physical access of the file itself to include extraction or decryption (if the file is encrypted) of the content of the file. For a non-limiting example, even if the user gains physical access to the file, he/she cannot extract any meaningful data or information from the file if the file is locked by the key and he/she does not have the permission to access the key.

In the example of FIG. 1, the proximity detection engine 116 is operable to determine the proximity of the host 102 from the access device 110, i.e., the physical distance between the two. The term "engine," as used herein, generally refers to any combination of software, firmware, hardware, or other component that is used to effectuate a purpose. The mechanism for actively detecting the distance between two specific devices is well known to those of skill in the art.

While the system 100 depicted in FIG. 1 is in operation, the host 102 may have one or more files 106 stored on it, wherein the files contain sensitive or private information and access to the files requires a key 114 even though the files themselves may be encrypted by the key. The key required to access the files is stored on an access device 110 separate from the host. When a user of the host initiates access (i.e., read, write, and/or modify) to the files via the user interface 104, the host may send a request to the access device 110 via the communication interface 108 for the key to access to the files. Once accepting the request for the key from the host via the communication interface 112, the access device may utilize a proximity detection engine 116 to determine the proximity of the host from the access device. The access device will provide the key to the host or to the user directly, if the host is within close proximity of the access device. Upon acceptance of the key to the files from the access device, the host enables the user to access the files via the key. When the access device is no longer in close proximity to the host, the access device revokes the key so that the files on the host can no longer be accessed.

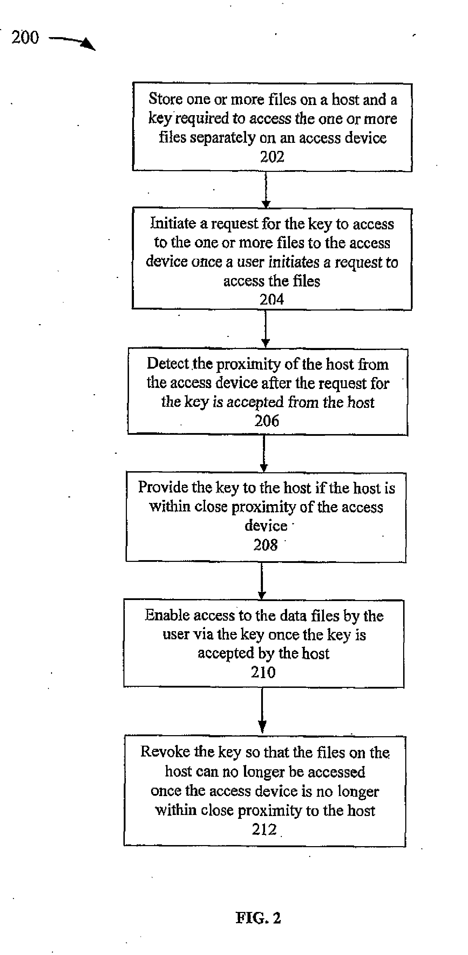

FIG. 2 depicts a flowchart of an example of a process to support separate storage of data and access key to the data. Although this figure depicts functional steps in a particular order for purposes of illustration, the process is not limited to any particular order or arrangement of steps. One skilled in the relevant art will appreciate that the various steps portrayed in this figure could be omitted, rearranged, combined and/or adapted in various ways.

In the example of FIG. 2, the flowchart 200 starts at block 202 where a key required to access one or more files is stored separately from the files. A user needs to have the key in order to access, i.e., extract content from, the files protected by the key a part of a data security mechanism. Separate storage of the key from the files reduces the risk of data loss in case the host storing the files is lost or stolen.

In the example of FIG. 2, once a user initiates a request to access the files, the flowchart 200 continues to block 204 where a request for the key needed to access to the files is sent to the access device where the key is stored. The communication between the host where the files are stored and the access device can be conducted via the communication interfaces running on the host and the access devices, respectively.

In the example of FIG. 2, after the request for the key is accepted by the access device, the flowchart 200 continues to block 206 where the proximity of the host from the access device is detected. By way of example but not limitation, such detection may involve sending a signal or light from the access device to the host and accepting a response, reflection, or feedback from the host. The physical distance between the two can then be calculated based on the separation in time or content of the response from the host.

In the example of FIG. 2, if it is determined that the host is within close proximity of the access device based, the flowchart 200 continues to block 208 where the access device then provides the key to the host or the user. For example, if the access device is too far away from the host, implying that the host is lost, stolen, unattended, or the authorized personnel is not around, the key will not be provide to the host and the access by the user making such attempt will be denied.

In the example of FIG. 2, once the key is accepted by the host, the flowchart 200 continues to block 210 where access to the data files by the user is enabled via the key. Here, the key can either be directly communicated to and accepted by the host, or it can be provided to the user, who may then enter the key to the host via the user interface.

In the example of FIG. 2, once the access device is no longer within close proximity to the host the flowchart 200 ends at block 212 where the access device revokes the key so that the files on the host can no longer be accessed. Here, the access device can revoke the key by communicating with the host to disable the key or dynamically generates a new key and makes the key previously provided to the host expire.

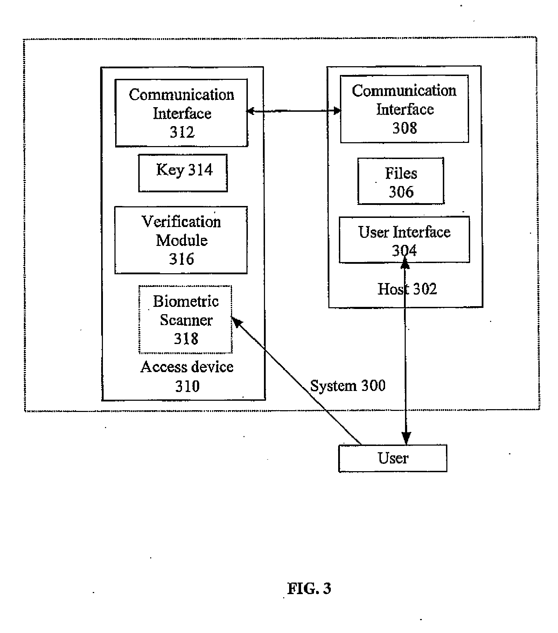

FIG. 3 depicts an example of a system 300 to support separate storage of data and access key to the data in another embodiment. In the example of FIG. 3, the system 300 includes a host 302, which comprises of a user interface 304, file(s) 306, and a communication interface 308, and an access device 310, which comprises of a communication interface 312, a key 314 to access the files, a verification module 316, and optionally a biometric scanner 318.

In the example of FIG. 3, the verification module 316 may be a software component running on the access deice, which is operable to first identify the user attempting to access the files on the host, and then determine if the user is authorized to access the files. Because of the potential sensitivity of content of the files, only user with appropriate authorization and/or security clearance can access the files. For a non-limiting example, only authorized managers outside of HR department of a company may have access to profiles of employee of the company.

In the example of FIG. 3, the optional biometric scanner 318 associated with the access device 310 is operable to collect biometrics of the user for verification of his/her identity. Here the biometrics of the user refer to measurements of physical characteristics of the user, which include but are not limited to, fingerprints, DNA, or retinal patterns of the user. Such physical characteristics are commonly used in verifying the identity of the user and are well known to those of skill in the art.

While the system 300 depicted in FIG. 3 is in operation, when a user initiates access to the files 306 stored on the host 302 via a user interface 304, the host may send a request to access device 310 via a communication interface 308 for the key 314 to access to the files. After accepting the request for the key from the host via a communication interface 312, the access device will first utilize a verification module 316 to verify the identity of the user attempting to access the one or more files. If the identity of the user is authenticated, the access device will provide the key to the host or to the user. The host may then enable access to the files by the user upon acceptance of the key. Once the user finishes access to the files or the host, the access device revokes the key so that the files on the host can no longer be accessed by others.

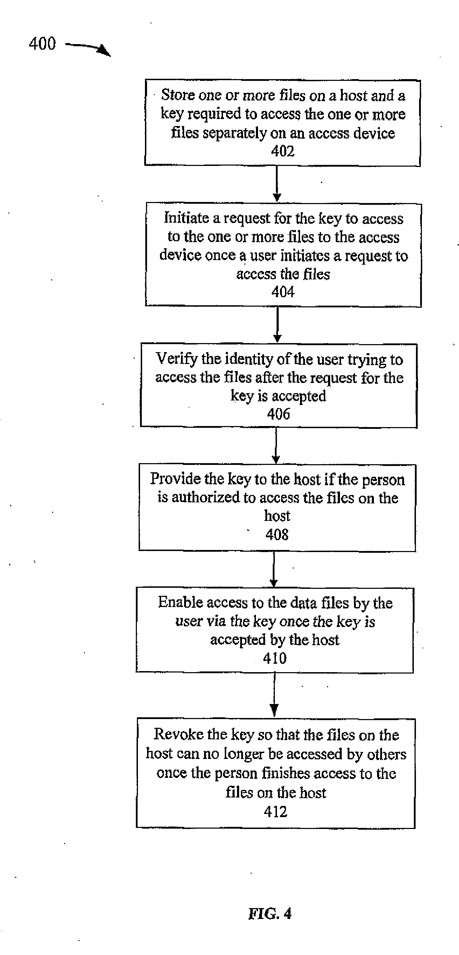

FIG. 4 depicts a flowchart 400 of an example of a process to support separate storage of data and access key to the data. In the example of FIG. 4, the flowchart 400 starts at block 402 where a key required to access one or more files is stored separately from the files. In the example of FIG. 4, once a user initiates a request to access the files, the flowchart 400 continues to block 404 where a request for the key needed to access to the files is sent to the access device where the key is stored.

In the example of FIG. 4, after the request for the key is accepted by the access device, the flowchart 400 continues to block 406 where the identity of the user trying to access the files is verified. Such verification may include first obtaining the identification of the user, and then determining if the user is authorized to access the files.

In the example of FIG. 4, if it is determined that the person is authorized to access the files on the host, the flowchart 400 continues to block 408 where the access device then provides the key to the host or the user. In the example of FIG. 4, once the key is accepted the host, the flowchart 400 continues to block 410 where access to the data files by the person is enabled via the key.

In the example of FIG. 4, once the person finishes access to the files on the host, the flowchart 400 ends at block 412 where the access device revokes the key so that the files on the host can no longer be accessed by others.

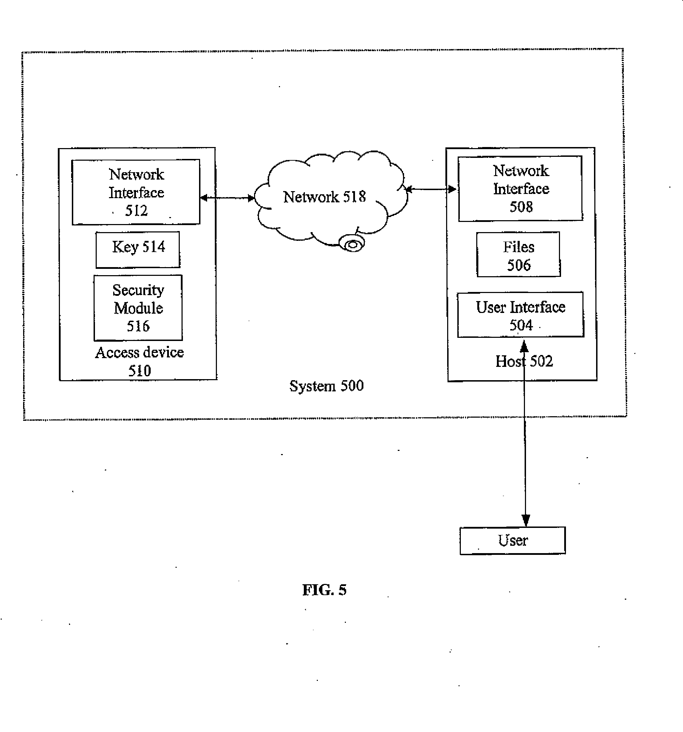

FIG. 5 depicts an example of a system 500 to support separate storage of data and access key to the data. In the example of FIG. 5, the system 500 includes a host 502, which comprises of a user interface 504, file(s) 506, and a network interface 508, and an access device 510, which comprises of a network interface 512, a key 514 to access the files, and a security module 516, and a network 518.

In the example of FIG. 5, the access device 510 can be a server machine. The security module 516 is a software component running on the access device 510, which monitors and manages the security status and/or availability of the host 502. Here, the security status of the host can be but is not limited to whether the host has been lost or stolen, whether the secured access to the host itself has been compromised, or access to the host and/or the files stored on it is unavailable to the user requesting for such access for any reason.

In the example of FIG. 5, the network 518 can be a communication network based on certain communication protocols, such as TCP/IP protocol. Such network can be but is not limited to, internet, intranet, wide area network (WAN), local area network (LAN), wireless network, and mobile communication network. The physical connections of the network and the communication protocols are well known to those of skill in the art.

While the system 500 depicted in FIG. 5 is in operation, a host 502 and an access device 510 communicate with each other over a network 518, where the host stores one or more files 506 while the access device separately stores key 514 required to access the files on the host 502. When a user initiates access to the files stored on the host via a user interface 504, the host may send a request to access device 510 via a communication interface 508 for the key 514 to access to the files. After accepting the request for the key from the host via a communication interface 512, the access device will first utilize the security module 516 to check the security status of the host. If the security status of the host 502 is confirmed, i.e., the host 502 and the files 506 stored on it are available for access, the access device will provide the key to the host or to the user. The host 502 may then enable access to the files 506 by the user upon acceptance of the key 514. If the security status of the host 502 is not confirmed, i.e., the host 502 and the files 506 stored on it may have been lost or otherwise unavailable for access, the access device will not provide the key to the host or to the user and the files 506 on the host 502 will not be accessed.

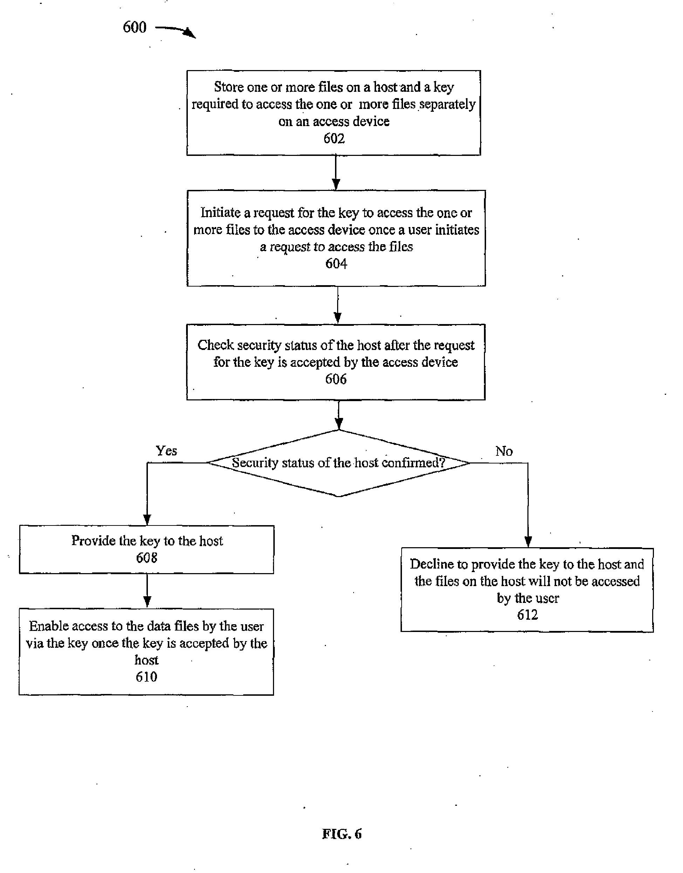

FIG. 6 depicts a flowchart 600 of an example of a process to support separate storage of data and access key to the data. In the example of FIG. 6, the flowchart 600 starts at block 602 where a key required to access one or more files is stored separately from the files. In the example of FIG. 6, once a user initiates a request to access the files, the flowchart 600 continues to block 604 where a request for the key needed to access to the files is sent to the access device where the key is stored over a network.

In the example of FIG. 6, after the request for the key is accepted by the access device, the flowchart 600 continues to block 606 where the security status of the host is checked. For example, the access device may determine if the host has been lost or stolen or access to the files stored on the host is unavailable to the user requesting for such access for any reason.

In the example of FIG. 6, if the security status of the host is confirmed, e.g., the host and the files on the host are available for access, the flowchart 600 continues to block 608 where the access device then provides the key over the network to the host or the user. In the example of FIG. 6, once the key is accepted the host, the flowchart 600 continues to block 610 where access to the data files by the user is enabled via the key.

In the example of FIG. 6, if the security status of the host is not confirmed, e.g., the host and the files stored on it may have been lost or otherwise unavailable for access, the flowchart 600 ends at block 612 where the access device declines to provide the key to the host or the user and the files on the host will not be accessed by the user.

One embodiment may be implemented using a conventional general purpose or a specialized digital computer or microprocessor(s) programmed according to the teachings of the present disclosure, as will be apparent to those skilled in the computer art. Appropriate software coding can readily be prepared by skilled programmers based on the teachings of the present disclosure, as will be apparent to those skilled in the software art. The invention may also be implemented by the preparation of integrated circuits or by interconnecting an appropriate network of conventional component circuits, as will be readily apparent to those skilled in the art.

One embodiment includes a computer program product which is a machine readable medium (media) having instructions stored thereon/in which can be used to program one or more hosts to perform any of the features presented herein. The machine readable medium can include, but is not limited to, one or more types of disks including floppy disks, optical discs, DVD, CD-ROMs, micro drive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data. Stored on any one of the computer readable medium (media), the present invention includes software for controlling both the hardware of the general purpose/specialized computer or microprocessor, and for enabling the computer or microprocessor to interact with a human viewer or other mechanism utilizing the results of the present invention. Such software may include, but is not limited to, device drivers, operating systems, execution environments/containers, and applications.

The foregoing description of various embodiments of the claimed subject matter has been provided for the purposes of illustration and description. It is not intended to be exhaustive or to limit the claimed subject matter to the precise forms disclosed. Many modifications and variations will be apparent to the practitioner skilled in the art. Particularly, while the concept "module" is used in the embodiments of the systems and methods described above, it will be evident that such concept can be interchangeably used with equivalent software concepts such as, class, method, type, interface, component, bean, module, object model, process, thread, and other suitable concepts. While the concept "interface" is used in the embodiments of the systems and methods described above, it will be evident that such concept can be interchangeably used with equivalent concepts such as, class, method, type, component, module, object model, and other suitable concepts. Embodiments were chosen and described in order to best describe the principles of the invention and its practical application, thereby enabling others skilled in the relevant art to understand the claimed subject matter, the various embodiments and with various modifications that are suited to the particular use contemplated.

## Claims

1. A system to support separate storage of data and access key to the data, comprising:
a host (102, 302, 502) operable to:
store one or more files (106, 306, 506), wherein access to the one or more files (106, 306, 506) requires a key (114, 314, 514);
initiate a request to an access device (110, 310, 510) separate from the host (102, 302, 502) for the key (114, 314, 514) to access to the one or more files (106, 306, 506) when a user initiates access to the files (160, 306, 506);
accept the key (114, 314, 514) to access to the one or more files (106, 306, 506) from the access device (110, 310, 510);
enable access to the one or more files (106, 306, 506) via the key (114, 314, 514);
said access device (110, 310, 510) operable to:
store the key (114, 314, 514) required to access the one or more files (106, 306, 506) on the host (102, 302, 502);
accept the request for the key (114, 314, 514) from the host (102, 302, 502);
determine whether a condition is met;
provide the key (114, 314, 514) to the host (102, 302, 502) or the user if the condition is met.

2. A system according to claim 1, wherein:
determining whether the condition is met comprises detecting the proximity of host (102) from the access device (110);
the access device (110) provides the key (114) to the host (102) or the user if the user is within close proximity of the access device (110).

3. A system of claim 1 or claim 2, wherein:
the host (102, 302, 502) is one of: a laptop PC, a desktop PC, a tablet PC, an iPod, a PDA, a server machine, a hard disk drive, a portable storage device, and a mobile phone.

4. A system of any of claims 1 to 3, wherein:
each of the one or more files (106, 306, 506) includes one or more of: text, graph, picture, image, drawing, mail, audio, and video clips.

5. A system of any of claims 1 to 4, wherein:
the one or more files (106, 306, 506) are encrypted or decrypted via the key (114, 314, 514).

6. A system of any of claims 1 to 5, wherein:
the access device (110, 310, 510) is a Bluetooth, WiFi or ZigBee device.

7. A system of claim 1, wherein:
determining whether a condition is met comprises verifying identity of the user trying to access the one or more files (306);
the access device (310) provides the key (314) to the host (302) or the user if the user is authorized to access the one or more files (306) on the host (302).

8. A system of claim 7, wherein:
the access device (310) further comprises a biometric scanner (318) operable to collect biometrics of the user.

9. A system of claim 8, wherein:
the biometrics of the user include one or more of: fingerprints, DNA, or retinal patterns of the user.

10. A system of claim 1, wherein:
determining whether a condition is met comprises checking security status of the host (502);
the access device (510) provides the key (514) to the host (502) or the user if the security status of the host (502) is verified.

11. A system of claim 10, wherein:
the access device (510) is a server machine.

12. A system of claim 10 or claim 11, wherein:
the host (502) and the access device (510) communicate with each other over a network (518).

13. A system of claim 12, wherein:
the network (518) is one of: internet, intranet, wide area network (WAN), local area network (LAN), wireless network, Bluetooth, a mobile communication network, and any TCP/IP based network.

14. The system of any of claims 10 to 13, wherein:
the security status of the host (502) is one of: whether the host (502) has been lost or stolen, whether secured access to the host (502) itself has been compromised, or access to the host (502) and/or the files (506) stored on it is unavailable to the user requesting for such access.

15. The system of any of claims 10 to 14, wherein:
said access device (510) declines to provide the key (514) to the host (502) if the security status of the host (502) is not verified.

16. The system of any preceding claim, wherein:
said access device (110, 310, 510) revokes the key (114, 314, 514) once the user finishes access to the one or more files (106, 306, 506) on the host (102, 302, 502).

17. A method to support separate storage of data and access key to the data, comprising:
storing one or more files (106, 306, 506) on a host (102, 302, 502) and a key (114, 314, 514) required to access the one or more files (106, 306, 506) separately on an access device (110, 310, 510); accepting a request for the key (114, 314, 514) required to access the one or more files (106, 306, 506);
determining whether a condition is met;
providing the key (114, 314, 514) to the host (102, 302, 502) if the condition is met.

18. A method according to claim 17, wherein:
determining whether the condition is met comprises detecting proximity of host (102) to the access device (110);
the key (114) is provided to the host (102) if the host (102) is within close proximity from the access device (110).

19. A method of claim 17 or claim 18, further comprising:
initiating the request for the key (114, 314, 514) required to access the one or more files (106, 306, 506) when a user initiates access to the files (106, 306, 506);
accepting the key (114, 314, 514) to access to the one or more files (106, 306, 506) from the access device (110, 310, 510);
enabling access to the one or more files (106, 306, 506) by the user.

20. A method of claim 17 to 19, further comprising:
encrypting or decrypting the one or more files (106, 306, 506) via the key (114, 314, 514).

21. A method of claim 17 to 20, further comprising:
revoking the key (114, 314, 514) once the condition is no longer met.

22. A method of claim 17, wherein:
determining whether the condition is met comprises checking security status of the host (502);
the key (514) is provided to the host (502) if the security status of the host (502) is verified.

23. A method of claim 22, further comprising:
declining to provide the key (514) to the host (502) if the security status of the host (502) is not confirmed.

24. A method of claim 22 or claim 23, further comprising:
enabling the host (502) and the access device (510) to communicate with each other over a network (518).

25. The method of claim 17, wherein:
determining whether the condition is met comprises verifying identity of a person trying to access the one or more files (306); the key (314) is provided to the host (302) if the user is authorized to access the one or more files (306) on the host (302).

26. The method of claim 25, further comprising:
taking biometrics of the user and verifying identity of the user.
